Europäisches Patentamt

European Patent Office

Office européen des brevets

(19)

(11) Publication number: **0 119 707**
**A1**

## (12) EUROPEAN PATENT APPLICATION

(21) Application number: **84300727.9**

(22) Date of filing: **06.02.84**

(51) Int. Cl.³: **G 07 F 7/10, H 04 L 9/02**

(30) Priority: **22.02.83 GB 8304876**

(43) Date of publication of application: **26.09.84**
**Bulletin 84/39**

(84) Designated Contracting States: **AT BE CH DE FR GB IT LI LU NL SE**

(71) Applicant: **BRITISH TELECOMMUNICATIONS, 2-12 Gresham Street, London EC2V 7AG (GB)**

(72) Inventor: **Serpell, Stephen Charles, 35 Elmhurst Drive, Ipswich Suffolk (GB)**

(74) Representative: **Leng, Francis Edward et al, British Telecom Intellectual Property Unit 151 Gower Street, London WC1E 6BA (GB)**

(54) **Automatic verification.**

(57) A transaction involving a customer (5), a retailer (6) and a bank (8) is carried out via a telecommunications link (7). The identities of the participants are automatically verified utilising a first verification key (ICf) stored by the retailer and by the bank and a second verification key (ICp) supplied by the customer to the retailer and stored at the bank. In the verification process the retailer encrypts a message consisting of or including a random element (D1) with the first verification key and sends the encrypt (D1) together with identifications of the retailer and the customer to the bank. The bank retrieves the two keys from its storage, deceypts, re-encripts with the second key and returns this re-crypt (Ei) to the retailer who uses the second verification key to confim that the returned message corresponds to the original. A match proves that the correct keys were utilised and permits the deduction that the participating parties were genuine. (References to «retailer» and «bank» indicate automatic equipment operated by same.)

ACTORUM AG

0119707

This invention relates to an automatic verification process and especially to an automatic process for use to facilitate commercial transactions in which funds are transferred using a telecommunications network.

A particularly important application of the invention concerns the automatic verification of information used in transactions involving transfer of funds via telecommunications networks. A typical transaction involves three parties namely:-

(1)   A customer

(2)   a retailer, and

(3)   the customer's bank,

and verifying the identities of the parties is important, e.g. to prevent frauds and other criminal activities. Errors could also arise from mechanical malfunction, e.g. mis-routing in the telecommunications network. It is an object of this invention to make fraud more difficult by increasing the probabilities of detection.

The automatic verification process according to the invention utilises two verification keys, each available at first and second stations. The active station encrypts data, e.g. data consisting of or containing a random element with both keys, transmits one encript to the other station which decrypts and encrypts using the other key. The re-crypt is returned to the active station and compared with the second encrypt. A match indicates that the two same keys were present at both stations. The comparison may also be achieved by decrypting the recrypt and comparing the decrypt with the data.

It is desirable that the process is repeated twice, i.e. once with the first station active and once with the second station active.

The automatic verification confirms that the correct keys were used. The use of secret keys, available only at the intended station, permits the deduction that the intended station participated. It is emphasised that the method of verification does not expose or compromise secret keys. It is expected that a station will include data storage means containing many secret keys each of which corresponds to one other station and is retrievable using the identity of that other station as address. The addresses may be exchanged openly. The retrieval of the correct keys confirms identity and the correctness of the keys is confirmed automatically by the method of the invention.

The automatic verification process is particularly adapted to confirm the identity of the (human) customer who provides:-

(1)   an address automatically read from a card which address therefore has the high accuracy associated with automatic readers;

(2)   additional data which is subject to human error.

Automatic verification may fail because of human error and it is desirable also to provide the human with a limited re-try facility (e.g. up to four attempts). In this case the first station has two keys (as specified above) but one is of higher accuracy (i.e. automatically retrieved from data storage) and the other of lower accuracy (i.e. affected by human input). It is preferred to transmit the encrypt from the key with higher accuracy to the second station together with addresses for the two keys. Decryption and re-encryption are carried out with the accuracy associated with automatic processes and the re-crypt returned to the first station is therefore accurate. Any discrepancy between the retained encrypt can be assigned to human error and retrials conducted without reference to the second location by storing the re-crypt. The invention also includes apparatus for performing the method at

      (1)   the first location

      (2)   the second location.

A specific embodiment of the invention will now be described by way of example with reference to the accompanying drawings in which:-

Figure 1 illustrates a transaction

Figure 2 illustrates the flow of information at the retailer's terminal, and

Figure 3 illustrates the flow of information in the bank's data processing equipment.

A typical transaction using the system includes the following events.

A customer 5 approaches an interface 6 (which is part of a retailer's terminal) to complete a transaction by paying for cetain goods. The terminal contacts bank 8 via telecommunications link 7 in order to arrange transfer of funds from the customer's account to the retailer's account. It is apparent that all parties require assurance that the system is safe, e.g. that criminals are not able to obtain goods or funds to which they are not entitled. Some (but not all) individual requirements will be identified.

The terminal needs to confirm that the customer 5 is genuine and also that the link 7 does in fact connect to the correct bank 8. Not only would mis-routing in the telecommunication network lead to errors but, more seriously, criminal activity could result in loss. Thus the "customer 5" could be a criminal conspiring with an accomplice who impersonates the bank so as to steal goods. Thus the terminal requires positive identification of both bank 8 and customer 5.

The bank 8 requires proper identifications of terminal and customer 5 to safeguard against the stealing of funds by criminals impersonating the customer 5 and/orthe terminal. In addition the bank has a duty of care to its various clients.

The major concern of the customer 5 is that the system shall protect against criminal access to the customer's account.

There is, therefore, a requirement for identification and this invention automatically carries out the identification process.

As the primary means of identification each party has an identification code, conveniently abbreviated to IC. Since the purpose of an IC is to identify two parties to one another it must be known to both, but both parties must keep their common IC secret from all other parties. Thus each terminal in the system may pair with any bank in the system and there is an IC for each pair; this is conveniently known as the "link IC" (because it is characteristic of the linked pair).

Each of the bank's clients also has an IC code, which is retained in data storage means at the bank. Each client will also require a substantial amount of other data to operate the system and this is conventionally recorded on a data card (preferably as a magnetic strip). Since the card may be lost or stolen data recorded therein should not be regarded as "secret" and it conventional for each client to have, in addition, a personal identification number, conveniently abbreviated to "PIN" and the client's security depends on the PIN's being kept secret. A PIN is usually short, e.g. about four decimal digits, and therefore a plurality of clients will have the same PIN. Therefore, it is preferred to calculate a characteristic personal IC from the data on the card, and, optionally, the PIN. This promotes adequate security provided the client promptly notifies the bank if the card is lost or stolen and/or if the PIN is compromised.

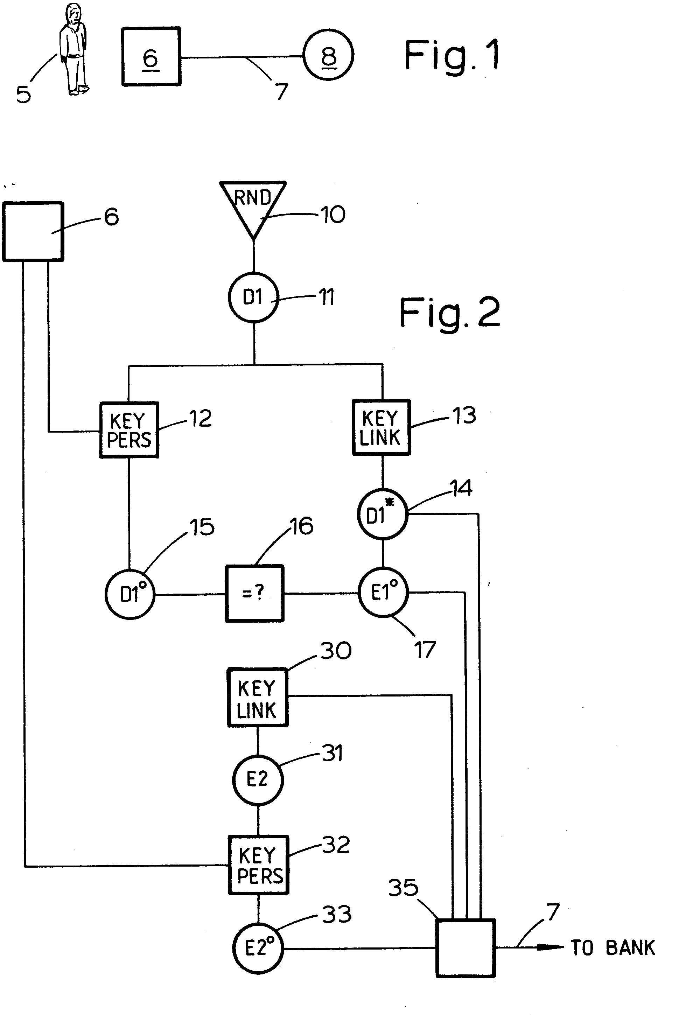

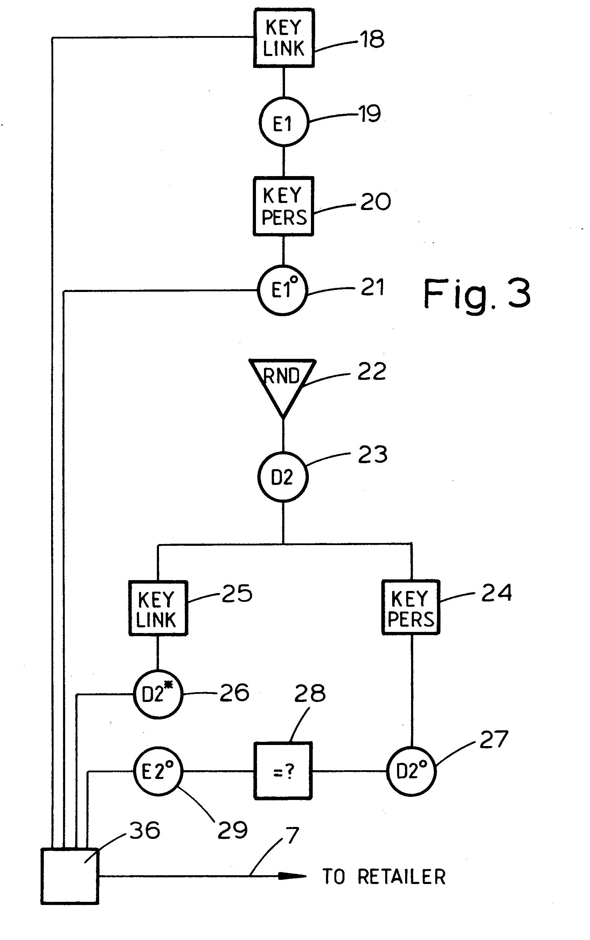

A preferred automatic method of verifying IC's will now be described with reference to Figures 2 and 3. It isa particular feature of this method that it minimises the risk of compromising the various IC's and that it also minimises use of the telecommunications network.

To start a transaction the customer's data card is placed in interface 6. The customer enters the (secret) PIN and a representative of the retailer enters information about the transaction, e.g. the amount to be transferred from the customer's account to the retailer's account. Interface 6 also reads the data card to identify the customer's bank, the customer's (alleged) identity and other information which may be required.

To complete preliminaries the retailer's terminal uses the PIN and information on the card to calculate the personal IC of the customer. The terminal also accesses its own data storage means to retrieve the link IC appropriate for the customer's bank. The verification now proceeds in two phases. In phase one the retailer's terminal verifies customer and bank. In phase two the bank verifies the customer and retailer

In phase one the terminal uses random number generator 10 to produce code D1 which is retained in store 11. Code D1 is encrypted twice, i.e.

(i) D1 is encrypted using the alleged personal IC of the customer as key in cypher engine 12 to generate code D1° and

(ii) D1 is also encrypted using the link IC as key in cypher engine 13 to generate code D1*.

Code D1° is retained in store 15 and code D1* in store 14.

The terminal now composes a contact message for the bank. This comprises the retailer's identity and the customer's (alleged) identity in clear and intelligible form together with code Dl*. This message is automatically transmitted via modem 35 and link 7 to the bank.

The bank receives this message on modem 36 and accesses its own data storage means, using addresses contained in themessage to retrieve the link IC appropriate to the terminal identified in the message and the personal IC of the (alleged) customer.

The bank uses the link IC as key in cypher engine 18 to decrypt Dl* into El. (El should be the same as Dl, but the system functions by verifying this circumstance. Different codes are used to emphasise that identity is not necessary, e.g. if fraud were attempted.) It also re-encrypts El is cypher engine 20 using the personal IC as key. This produces code El° which is retained in store 21. This is automatically transmitted to the retailer's terminal via modem 36, link 7 and modem 35 which places code El° in store 17.

Comparator 16 compares the content of stores 15 and 17. A match indicates

(1)    that Dl* was decrypted by the correct link IC as key. This establishes, with reasonable probability, that link 7 was to the correct bank because only the correct bank has knowledge of the link IC;

(2)    that El was encrypted using the same key as the personal IC entered in interface. This establishes that the customer's alleged IC is the same as that in the bank's record and hence that the customer is genuine.

If the match fails it is assumed that the customer made an error and re-entry of the PIN is attempted. Since store 17 still contains E1° a re-match can be carried out without using link 7 to refer to the bank. Several attempts, e.g. four, at matching are allowed. If all fail the transaction is aborted but success establishes that the customer is genuine and allows phase two to commence. (As an alternative the customer may first enter the PIN at this stage.)

In phase two the retailer's terminal composes a transaction message requesting the bank to transfer funds. Clear and intelligible identification of the customer and the retailer are included. On receipt ofthis message the bank satisfies itself that the retailer and customer are genuine by repeating the identification procedure.

This repetition is started by the bank which uses random number generator 22 to produce code D2 which is retained in store 23. Code D2 is encrypted twice, namely, D2 is encrypted in cypher engine 25 using the link IC as key giving code D2* in store 26 and D2 is also encrypted in cypher engine 24 using the personal IC from its own records as key giving code D2° in store 27.

Code D2* is sent, via link 7, to the retailer's terminal where it is decoded in cypher engine 30 to give the code E2 in store 31. Re-encryption in cypher engine 32, using the personal IC from interface 6 (verified by the terminal during phase one) as key gives code E2° in store 33. Link 7 is used again to send code E2° to store 29 where it is compared with the content of store 27 in comparator 28. A match is taken as proof, for the bank,that the request comes from a genuine customer and a genuine retailer.

To save usage of link 7 the sendings of El° and D2* from bank to terminal are preferably combined in the same signal. When the bank is satisfied with identifications it accepts the transaction message and acts upon it. Preferably it returns a record of what it has done to the retailer. Terminal 6 preferably makes a hard copy of the transaction for the customer.

The orginators of the messages passed by the system are authenticated by the "secret" ICs of the participants. It is important that these be kept private. The security can be enhanced by changing the ICs at suitable intervals. The system never passes ICs around the telecommunications network in intelligible form. Verification is achieved by passing random numbers encrypted by ICs so the IC cannot be revealed. In addition, the usage of the telecommunication network is minimised because the system limits usage to short messages and links need not be kept open while slow procedures are performed. The preferred method is encryption used the DES algorithm as described in "FIPS 64" as published by the U.S. Government.

It is noted that all messages passing over link 7 may need to be protected against illicit modification during transmission. This may be guaranteed by appending a special data block at the end of each message as it is sent. This block is conventionally termed the message authentication code, and is formed by using the link IC as a key to encrypt data which is a function of every bit of the message to be protected. If the message and its authentication cade still tally at its destination then the message can not have been modified in transit.

It is convenient to arrange the first and second station with only one cypher engine each. The cypher engine at each end station handles all the cryptography at that station.

It is emphasised that the methods disclosed herein are automatic methods carried out electronically. Reference to "Code", "Key", "Data" and "Information" should be construed as representations suitable for automatic processing. Different forms of representation are appropriate in different parts of the method, eg electromagnetic or electrical pulses during transmission, magnetisation in storage and voltages or currents to actuate processing elements.

# CLAIMS

1.   Automatic process for confirming identities at two different stations which method comprises:-

(a)   at the first station:-

(i)   generating a first verification code by encrypting data with a first identification key available at the first station

(ii) transmitting said first verification code to the second station

(b)   at the second station:-

(i)   receiving said first verification code

(ii) decrypting said first verification code using a first verification key available at the second station

(iii) generating a second verification code by encrypting the de-crypt obtained in (b)(ii) with a second verification key available at the second station

(iv) transmitting said second verification code to the first station

(c)   at the first station:-

(i)   receiving the second verification code (ii) utilising a second verification key available at the first station to confirm that second verification code is derived from the same data as the first verification code.

2.   An automatic process according to claim 1, wherein step (c)(ii) comprises generating a third verification code by encrypting the data used in step (a)(i) with the second identification key available at the first station and comparing the third verification code with the second verification code.

3.  An automatic process according to claim 1, wherein the second station also verifies identity, said verification comprising the repetition of the sequence defined in claim 1 with the function of the two station interchanged.

4.  An automatic process according to any one of claims 1, 2 or 3, wherein an address and the second identification key for the first station are obtained by input into the first station, the address is sent to the second station which accesses storage means located at the second station with said address to retrieve the second identification key for the second station whereby the verification of step (c)(ii) confirms that the second key input into the first station matches the second key retrieved by the second station.

5.  An automatic process according to any one of the preceeding claims, in which the data encrypted in step (a)(i) is either a random number or it contained a random element.

6.  Apparatus for carrying out a process according to claim 1 at the first station which comprises

   (i)  A cypher engine adapted to produce a first verification code by encrypting data using a first identification key

   (ii) means for transmitting the first verification code to a second station

   (ii) means for receiving a second verification code from the second station, and

   (iv) means adapted to utilise a second identification key to confirm that the second identification code is derived from the same data as the first identification code.

7.    Apparatus according to claim 6 wherein item (iv) comprises a cypher engine adapted to produce a third identification code by re-encrypting the data with a second identification key and a comparitor for comparing the third identification code with the second identification code.

8.    Apparatus according to either claim 6 or claim 7, which also comprises a random number generator for introducing a random element into the data for encryption.

9.    Apparatus for carrying out a process according to claim 1 at the second station which comprises:-

(a)    means for receiving a first identification code from a first station,

(b)    a cypher engine adapted to decrypt a first identification code with a first identification key and to produce a second identification code and

(c)    means for transmitting the second identification code to the first station.

Fig.1

Fig.2

TO BANK

Fig. 3

0119707

European Patent
Office

EUROPEAN SEARCH REPORT

Application number

EP 84 30 0727

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | EP-A-0 002 580 (IBM)<br><br>* Abstract; claims; figure 1 * | 1,3,5, 6,8,9 | G 07 F 7/10<br>H 04 L 9/02 |
| A | EP-A-0 029 894 (IBM)<br><br>* Abstract; claims; figures 1,2; page 10, line 19 - page 14, line 27 * | 1-3,5-9 | |
| A | US-A-3 798 605 (M. FEISTEL)<br><br>* Abstract; figure 2; column 6, line 43 - column 8, line 8 * | 1,3-6, 8,9 | |
| P,X | EP-A-0 089 087 (N.V. PHILIPS' GLOEILAMPENFABRIEKEN)<br>* Abstract; figures 1,3; claims; page 3, line 32 - page 7, line 38 * | 1,2,4-9 | |

TECHNICAL FIELDS
SEARCHED (Int. Cl. ³)

G 07 F 7/10
G 06 F 15/30
H 04 L 9/00
H 04 L 9/02

The present search report has been drawn up for all claims

| Place of search | Date of completion of the search | Examiner |
|---|---|---|
| THE HAGUE | 05-06-1984 | DAVID J.Y.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82